# FASCICULE DE BREVET EUROPEEN

(11) **EP 3 043 631 B1**
(45) Date de publication et mention de la délivrance du brevet: **09.11.2022**
(21) Numéro de dépôt: 14767145.7
(22) Date de dépôt: 08.09.2014
(51) Int. Cl.: A01B 15/02, A01B 15/06

(54) **DISPOSITIF DE FISSURATION**
RISSBILDUNGSVORRICHTUNG
CRACKING DEVICE

(30) Priorité: 09.09.2013 FR 1358654
(43) Date de publication de la demande: 20.07.2016
(73) Titulaire: Carbure Technologies, 49490 Noyant Villages (FR)
(72) Inventeur: DUMOULIN, Tom, F-49400 Saumur (FR)
(74) Mandataire: Nony
(86) Numéro de dépôt international: PCT/IB2014/064317
(87) Numéro de publication internationale: WO 2015/033318

(56) Documents cités:
- EP-A2- 0 101 245
- DE-U1- 29 814 840
- DE-U1- 29 814 840
- FR-A1- 2 621 210
- GB-A- 2 100 105
- US-A- 4 036 307

## Description

### Domaine technique

La présente invention concerne un dispositif de fissuration destiné à être fixé sur un étançon d'un déchaumeur ou d'un décompacteur. Un tel dispositif est destiné à fissurer et décompacter la terre afin de casser la semelle de labour pour permettre aux racines des plantes de trouver plus facilement l'humidité, ce qui améliore leur croissance et le rendement. A cet effet, lors de son utilisation, un dispositif de fissuration entre classiquement d'environ 35 cm dans le sol.

### Art antérieur

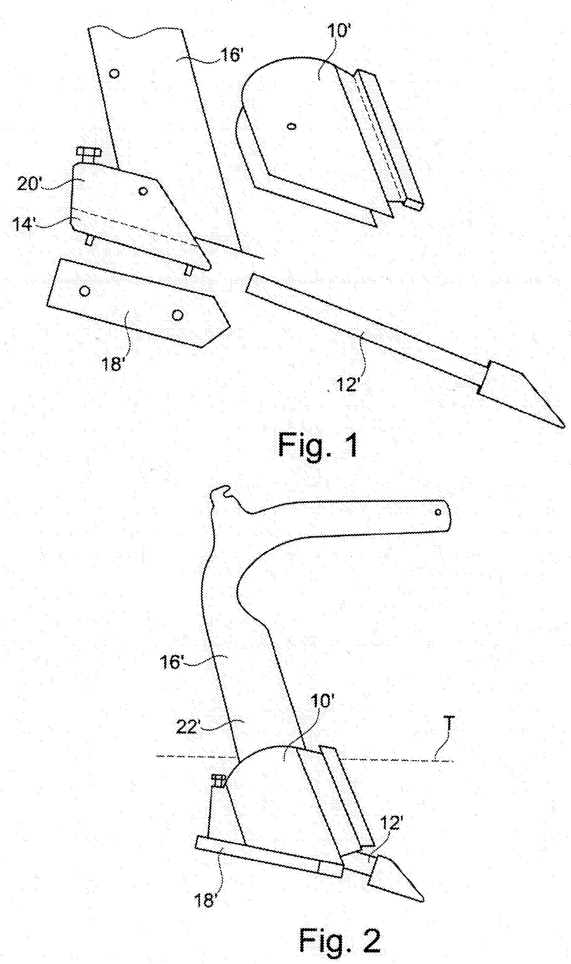

Comme représenté sur la figure 1, un tel dispositif comporte classiquement une chaussette 10', ou "nez de protection", destinée à protéger l'étançon, un carrelet 12', monté dans un fourreau 14' défini par l'étançon 16' et un sabot de fissuration 18' fixé à l'extrémité de l'étançon. Comme représenté sur la figure 2, l'étançon a classiquement la forme d'une virgule et peut être fixé à un tracteur de manière que le dispositif de fissuration puisse être tiré sous la terre (dont la surface est représentée symboliquement par la ligne T sur la figure 2).

Pour la fixation du carrelet 12' et du sabot de fissuration 18', l'étançon est classiquement pourvu, à son extrémité, d'une pièce massive 20', de forme complexe, soudée sur la barre principale 22' de l'étançon. L'encombrement et le poids de l'étançon rendent difficile le montage du dispositif de fissuration.

DE 298 14 840 U1 divulgue un dispositif de fissuration destiné à être fixé sur un étançon d'un déchaumeur ou d'un décompacteur avec les caractéristiques techniques du préambule de la revendication 1.

Il existe un besoin pour un nouveau dispositif de fissuration permettant de résoudre, au moins partiellement, les problèmes susmentionnés.

### Résumé de l'invention

L'invention propose un dispositif de fissuration destiné à être fixé sur un étançon d'un déchaumeur ou d'un décompacteur selon la revendication 1.

Des modes de réalisation préférés sont décrits dans les revendications dépendantes.

La chaussette n'a donc plus uniquement un rôle de protection de l'étançon, mais assure également une fonction de fixation du carrelet et/ou du sabot de fissuration.

Comme on le verra plus en détails dans la suite de la description, la fabrication de l'étançon en est simplifiée. En outre, le dispositif de fissuration peut être plus polyvalent, c'est-à-dire qu'il peut être facilement adapté pour être monté sur différents étançons. Le poids global de l'étançon et du dispositif de fissuration peut être également réduit. Enfin, le dispositif de fissuration est plus facile à monter et à démonter.

Le montage et le démontage du carrelet en sont avantageusement simplifiés. En outre, on supprime le risque de blocage associé à une fixation par vissage.

Avantageusement, le risque de remontée de cailloux en est réduit, ce qui améliore l'efficacité de l'opération de fissuration.

Avantageusement, il est ainsi possible, en fonction de l'usure, de ne changer qu'un seul des sabots de fissuration. En outre, les sabots de fissuration peuvent être précisément adaptés à la texture du sol à fissurer.

### Brève description des figures

D'autres caractéristiques et avantages de l'invention apparaitront encore à la lecture de la description détaillée qui va suivre et à l'examen du dessin dans lequel :
- la figure 1 représente un étançon et un dispositif de fissuration démonté, selon la technique antérieure ;
- la figure 2 représente le dispositif de fissuration de la figure 1 après montage sur l'étançon ;
- les figures 3 à 6 représentent, en perspective (figures 3, 4 et 6) et vu de derrière (figure 5), un dispositif de fissuration selon l'invention ;
- la figure 7 représente, en vue éclatée, une partie de la chaussette du dispositif représenté sur les figures 3 à 6, avec cependant une découpe 76 supplémentaire,
- les figures 8a à 8e représentent, en perspective, différentes vues d'un dispositif de fissuration selon l'invention comportant des moyens de fissuration latérale,
- les figures 9a et 9b représentent, en perspective et en détail, respectivement, un dispositif de fissuration selon l'invention équipé d'un semoir, et
- les figures 10a, 10b et 10c représentent un ensemble monobloc carrelet-sabot de fissuration, et un dispositif de fissuration selon l'invention pourvu d'un tel ensemble

Dans les différentes figures, des organes identiques ou analogues sont désignés par des références identiques.

### Description détaillée

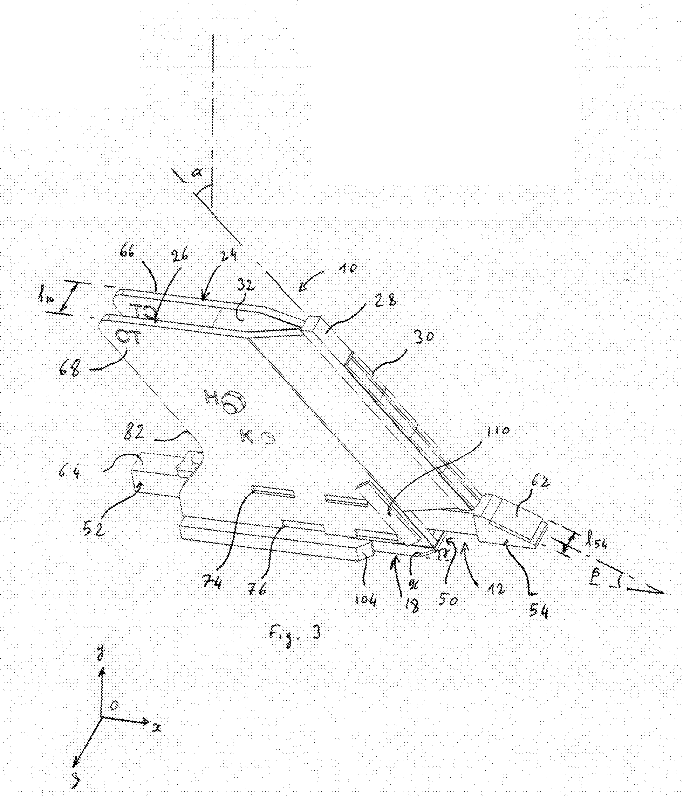

Dans la présente description, les adjectifs "inférieur", "supérieur", "horizontal", "vertical", "avant", "arrière" et « latéral » sont définis par rapport à la position du dispositif de fissuration, tel que représenté sur la figure 3, le plan (x,z) correspondant à la surface horizontale, y définissant la direction verticale et x définissant la direction longitudinale. Le plan du sabot est représenté à l'horizontal. Cependant, lors de l'utilisation du dispositif, ce plan forme classiquement un angle d'environ 20° avec le sol.

Par « comportant un » ou « comprenant un », on entend, sauf indication contraire, « comportant au moins un ».

Les figures 1 et 2 ayant été décrites en préambule, on se reporte à la figure 3.

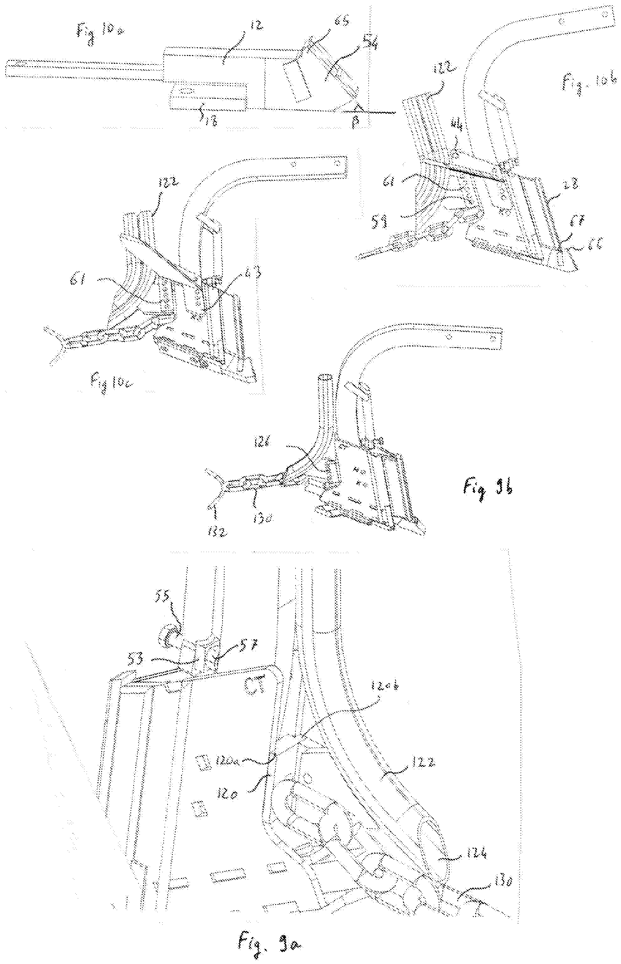

Comme représenté sur la figure 3, un dispositif de fissuration selon l'invention comporte classiquement une chaussette 10, un carrelet 12 et un premier sabot de fissuration 18. Dans un mode de réalisation préféré, comme représenté sur la figure 10a, le carrelet 12 et le premier sabot de fissuration 18 forment un ensemble monobloc. La résistance mécanique en est améliorée. La fixation sur la chaussette en est également simplifiée. Par exemple, sur la figure 10c, un nombre limité de vis suffit à fixer à la fois le carrelet et le sabot de fissuration.

La chaussette 10 peut être en particulier en un acier à haute limite élastique, ou "HLE". Selon l'invention, la chaussette 10 comporte des première et deuxième joues latérales, 24 et 26, respectivement, qui s'étendent sensiblement parallèlement l'une à l'autre sur une partie de leur longueur, puis se rejoignent selon un bord d'attaque 28. La forme effilée, ou « pointue », vers l'avant de la chaussette favorise la pénétration de la chaussette dans le sol.

De préférence, le bord d'attaque 28 forme, avec une normale au plan du sabot, un angle α inférieur à 60°, de préférence inférieur à 50°, de préférence inférieur à 40°. Avantageusement, un tel angle α limite la remontée des cailloux vers la surface du sol.

De préférence, le bord d'attaque 28 est protégé par une plaquette frontale de protection 30 en un matériau résistant à l'abrasion, par exemple en carbure de tungstène. Les dimensions de la plaquette frontale de protection 30 peuvent être par exemple de 30 × 40 × 5 mm³. De préférence, une ou plusieurs plaquettes frontales de protection 30 s'étendent jusqu'à l'extrémité inférieure du bord d'attaque 28.

Une entretoise 32 est disposée entre les joues 24 et 26, de préférence dans la partie avant du volume s'étendant entre ces deux joues. Dans un mode de réalisation préféré, l'entretoise 32 est une plaque, de préférence positionnée en partie supérieure de la chaussette.

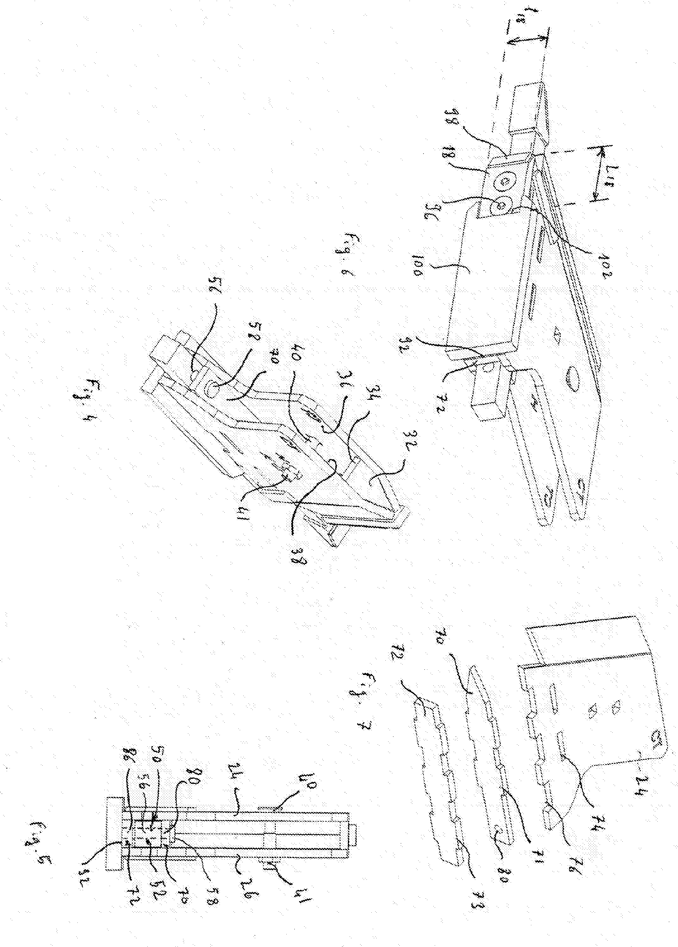

Avantageusement, l'entretoise 32 contribue à la rigidité de la chaussette, et donc à sa durée de vie. En outre, elle assure un écartement sensiblement constant entre les deux joues, ce qui permet une solidarisation étroite de la chaussette sur l'étançon. De préférence, l'entretoise 32 présente une face arrière 34 (voir figure 4) qui, avec les faces internes 36 et 38 des joues 24 et 26, respectivement, définit des surfaces d'appui pour l'étançon. De préférence, ces surfaces d'appui sont sensiblement complémentaires à celles de la partie de l'étançon qui, en position de service, est introduite entre les joues 24 et 26. Avantageusement, le maintien du dispositif de fissuration sur l'étançon en est amélioré. Classiquement, la chaussette 10 comporte par ailleurs des moyens permettant sa fixation sur l'étançon. Ces moyens sont classiquement désactivables, c'est-à-dire permettent un démontage de la chaussette. Par exemple les joues peuvent être percées d'orifices 39 respectifs, en regard l'un de l'autre. Ces orifices, alignés avec un trou traversant correspondant de l'étançon, peuvent être traversés par une vis 40, un boulon 41 vissé sur la vis 40 assurant la solidarisation de la chaussette à l'étançon.

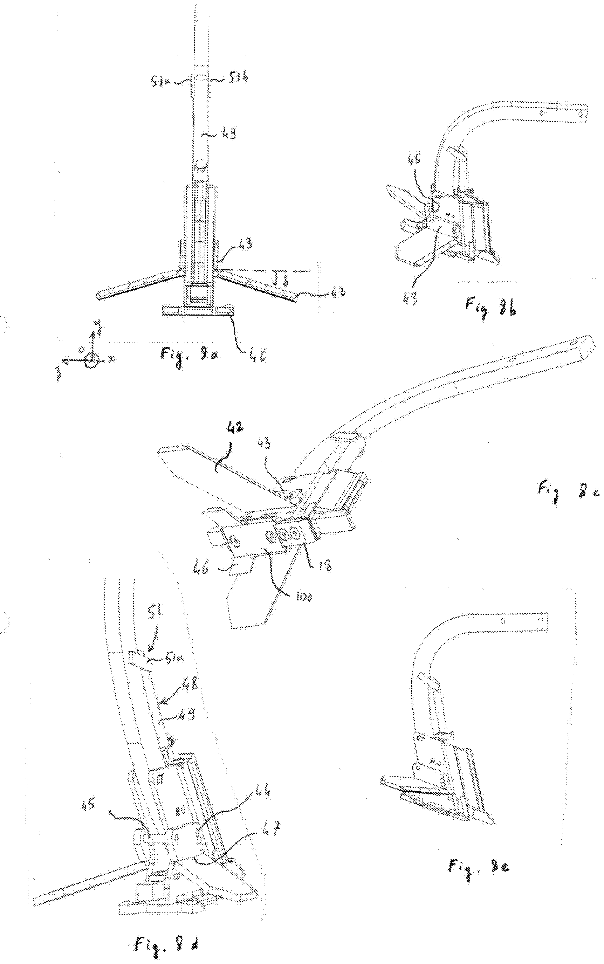

Dans un mode de réalisation, des ailes 42 latérales, s'étendant de préférence sensiblement horizontalement, peuvent être fixées sur les joues de la chaussette, de préférence de manière amovible, de préférence au moyen de la vis 40, non représentée sur les figures 8a-e.

La vis 40 traverse ainsi de part en part les plaques 43, les joues de la chaussette et l'étançon.

De préférence, les ailes 42 latérales sont inclinées par rapport à un plan horizontal, de préférence vers le bas, d'un angle δ de préférence supérieur à 10° et/ou inférieur à 40°, de préférence d'environ 20°, comme représenté sur la vue de face de la figure 8a. De préférence, les ailes 42 ne sont pas inclinées vers l'avant, ni vers l'arrière, comme cela est bien visible sur la figure 8a. En particulier la ligne de jonction 47 entre une aile 42 et la plaque 43 correspondante est sensiblement horizontale. Autrement dit, l'axe Ox s'étend parallèlement au plan général d'une aile 42.

De préférence, une aile 42 est fixée sur une joue correspondante par l'intermédiaire d'une plaque 43, de préférence verticale, de préférence percée d'une pluralité de trous 44 permettant un réglage en hauteur de l'aile 42.

De préférence, les trous 44 sont également disposés et/ou conformés de manière à autoriser un réglage de l'inclinaison des ailes 42 par rapport au plan horizontal (x, z). Par exemple, comme représenté sur les figures 10b et 10c, un trou 44 peut être oblong.

Dans un mode de réalisation, comme représenté sur la figure 8d, les deux plaques 43 droite et gauche des deux ailes 42 sont reliées l'une à l'autre au moyen d'une barre de liaison 45 sur laquelle l'étançon, et en particulier le chant arrière de l'étançon, peut venir en appui, comme représenté sur la figure 8d. La stabilité du dispositif de fissuration en est améliorée.

De préférence, la barre de liaison est amovible.

De préférence, comme représenté sur les figures 10b et 10c, la barre de liaison traverse un trou 59 ménagé dans une plaque 61, de préférence sensiblement verticale, fixée à l'arrière de la chaussette. La stabilité des ailes 42 en est améliorée.

De préférence, la plaque 61 comporte une pluralité de trous 59, de préférence disposés selon une ligne, de préférence sensiblement rectiligne, sensiblement parallèle à une ligne de trous 44. Le réglage en hauteur et/ou en inclinaison en est facilité. Dans un mode de réalisation, les ailes 42 sont fixés rigidement l'une à l'autre, par exemple vissées l'une sur l'autre ou, de préférence, soudées l'une à l'autre en un ensemble monobloc. Cet ensemble peut être fixé sur l'étançon ou, de préférence, sur la chaussette.

De préférence encore, le dispositif de fissuration comporte des ailettes 46 latérales qui s'étendent sensiblement horizontalement, comme représenté sur la figure 8a. Les ailettes 46 peuvent être notamment fixées sur le premier sabot de fissuration 18 ou, comme dans le mode de réalisation représenté sur les figures 8a-e, sur un deuxième sabot de fissuration 100 décrit ci-après. De préférence, les ailettes 46 sont soudées sur le premier sabot de fissuration 18 et/ou sur le deuxième sabot de fissuration 100.

De préférence, la longueur des ailettes 46 est plus de deux fois, de préférence plus de trois fois, de préférence plus de quatre fois, voire plus de cinq fois inférieur à la longueur des ailes 42. De préférence, la surface des grandes faces (intrados et extrados) des ailettes 46 est plus de quatre fois, plus de cinq fois, .plus de six fois, voire plus de sept fois inférieure à la surface des grandes faces des ailes 42.

Une ailette 46 peut présenter, par exemple, les dimensions suivantes : 45 × 40 × 15 mm³.

De préférence, la fixation de la chaussette sur l'étançon autorise un pivotement limité de la chaussette. C'est pourquoi, de préférence, la chaussette n'est fixée sur l'étançon que par une unique vis 40. Avantageusement, lors de l'utilisation, sous l'effet des variations de la texture du sol, la chaussette peut ainsi générer des micro-percussions qui améliorent la fissuration. De préférence l'oscillation est guidée par les deux parties parallèles de la chaussette et l'étançon peut venir alternativement percuter la face 34 de l'entretoise 32 et la plaque supérieure 70 décrite ci-après.

Pour mieux contrôler ce pivotement de la chaussette, voire le supprimer, le dispositif de fissuration peut encore comporter une fourchette 48 comportant un manche 49 et un étrier 51, constituée de deux branches 51a et 51b venant chevaucher l'étançon, comme représenté sur les figures 8a à 8e. L'étrier permet de limiter efficacement les mouvements latéraux du dispositif de fissuration. Les branches de l'étrier peuvent être, par exemple, des fers plats de 6 mm d'épaisseur.

Le manche 49 présente de préférence une largeur supérieure ou égale à l'épaisseur de l'étançon, de manière à protéger ce dernier, comme représenté sur la figure 8a. Le manche peut être par exemple un tube métallique de 25 mm de diamètre et de 200 mm de longueur.

La fourchette 48 est de préférence fixée de manière amovible sur la chaussette. De préférence, le manche est serré contre une plaque 53 soudée sur la chaussette, entre la tête d'une vis 55 et un écrou 57 vissé sur la vis 55.

De préférence, la chaussette 10 comporte des moyens permettant sa fixation à différents étançons, par exemple deux orifices H et K correspondant à des étançons différents.

La chaussette définit, dans sa partie inférieure, un fourreau 50 destiné à recevoir le carrelet 12. Le fourreau s'étend de préférence sensiblement parallèlement au plan du sabot. Il peut être défini par des parois pleines ou présentant des évidements, voire par des barrettes. Le poids en est avantageusement réduit.

De préférence, la chaussette 10 comporte encore des plaquettes d'usure latérales 110, qui s'étendent sur les faces externes 66 et 68 des joues 24 et 26, respectivement, de préférence à proximité de l'extrémité avant des parties parallèles des joues, de préférence encore à hauteur de la partie de ces joues qui définissent le fourreau 50. Les dimensions des plaquettes d'usure latérales 110 sont par exemple de 72 × 15 × 3 mm³.

Le carrelet 12, par exemple en acier, comporte classiquement une barre 52 dont une extrémité avant est prolongée par une tête 54. La barre 52 est destinée à être introduite et maintenue dans le fourreau 50. De préférence, elle présente une section transversale complémentaire à celle du fourreau 50. La section transversale de la barre 52 peut être rectangulaire, par exemple de section carrée. La section peut être, par exemple, de 30 mm × 30 mm.

Le dispositif de fissuration comporte des moyens pour fixer et/ou guider la barre 52 sur la chaussette 10. De préférence, pour être immobilisée sur la chaussette, la barre 52 comporte un orifice traversant 56 destiné à être traversé par une tige 58. De préférence encore, la barre comporte plusieurs orifices 56 de manière que le carrelet 12 puisse être bloqué dans le fourreau 50 dans plusieurs positions. Avantageusement, la modification de la position du carrelet 12 permet de tenir compte de l'usure de la tête 54. Dans un mode de réalisation préféré, la barre 52 est percée de 2 orifices 56 qui, dans la position représentée sur la figure 3, s'étendent sensiblement verticalement.

L'orifice 56 peut par exemple avoir un diamètre supérieur à 5 mm, supérieur à 10 mm, par exemple d'environ 11 mm, de manière à recevoir une tige 58 d'un diamètre légèrement inférieur, par exemple d'un diamètre de 10 mm.

La tête 54 présente une face 60 inclinée d'un angle β par rapport au plan du sabot, de préférence supérieur à 15°, supérieur à 20° et/ou inférieur à 50°, inférieur à 40°, voire inférieur à 30°.

Dans un mode de réalisation, préféré, comme sur la figure 10a, l'angle β par rapport au plan du sabot est de préférence supérieur à 15°, supérieur à 20°, supérieur à 30°, supérieur à 40° et/ou inférieur à 70°, inférieur à 60°, voire inférieur à 50°. La remontée de cailloux en est limitée.

Une plaquette d'usure 62 est fixée sur la face inclinée 60, par exemple par brasure. La plaquette d'usure 62 peut être, par exemple, en carbure de tungstène. Dans un mode de réalisation, ses dimensions sont de 45 × 18 × 5 mm³. Dans un mode de réalisation, la plaquette d'usure 62 est bombée, l'épaisseur variant de préférence d'environ 5 mm sur l'axe médian à environ 2 mm aux extrémités avant et arrière.

Cette plaquette peut être rechargée avec du carbure de bore.

De préférence, la largeur l₅₄ de la tête est sensiblement constante. De préférence, elle est inférieure à la largeur l₁₀ séparant les faces externes 66 et 68 des joues 24 et 26, respectivement. De préférence encore, la largeur l₅₄ de la tête est supérieure à l'écartement entre les faces internes 36 et 38 des joues 34 et 36, respectivement. De préférence, la plaquette frontale de protection 30 s'étend sensiblement jusqu'à la face supérieure 64 du carrelet 12.

De préférence, la tête 54 présente un bec 65 qui remonte jusqu'à une position en hauteur au-dessus de l'extrémité inférieure 67 du bord d'attaque 28 de la chaussette, comme représenté sur la figure 10b. De manière remarquable, cette caractéristique limite le coincement de matière, par exemple de ficelles, entre la tête et ledit bord d'attaque.

Le fourreau 50 de la chaussette est de préférence défini par les joues 24 et 26 et par des plaques supérieure et inférieure, 70 et 72 respectivement, fixées sur lesdites joues, par exemple par soudure, de préférence par soudure par bouchon. De préférence, les plaques supérieure 70 et inférieure 72 s'étendent sensiblement parallèlement l'une à l'autre, de préférence sensiblement parallèlement au plan du sabot. Dans un mode de réalisation, la plaque supérieure 70 comporte des excroissances latérales 71 (voir figure 7) qui sont introduites dans des découpes 74 ménagées dans les joues. Ces découpes simplifient le montage de la plaque supérieure 70 et renforcent la solidité de la chaussette. De même, la plaque inférieure 72 peut comporter des excroissances latérales 73 logées dans des découpes 76 ménagées dans les joues 24 et 26. Pour faciliter l'assemblage, les découpes 76 peuvent avantageusement déboucher sur le bord inférieur des joues, comme représenté. Le nombre de découpes 74 et 76 sur une joue, n'est pas limité mais est de préférence compris entre deux et trois. Dans le mode de réalisation représenté sur la figure 7, chaque joue comporte deux découpes 74 et trois découpes 76.

De préférence, la plaque supérieure 70 est percée d'un orifice traversant 80 autorisant la pénétration de la tige 58 afin de fixer le carrelet 12 sur la chaussette 10. Dans le mode de réalisation préféré, l'orifice traversant 80 est à proximité de l'extrémité arrière de la plaque supérieure 70, par exemple à moins de 5 cm, moins de 3 cm ou moins de 1 cm de cette extrémité. De préférence encore, la plaque supérieure 70 fait saillie du bord arrière 82 des joues, ce qui facilite l'insertion de la tige 58 dans les orifices 56 et 80.

De préférence encore, la plaque inférieure 72 est également percée d'un orifice 86, de préférence traversant, en regard de l'orifice traversant 80 de la plaque supérieure 70. De préférence, la tige 58 présente une longueur suffisante pour traverser à la fois la plaque supérieure 70, la barre 52 et la plaque inférieure 72. Le maintien du carrelet 12 sur la chaussette 10 peut ainsi être assuré, simplement et de manière très fiable, par une simple tige ou "goupille". Le montage du carrelet 12 est également simplifié.

De préférence, les moyens de fixation du carrelet 12 sur la chaussette 10 ne comportent pas de vis filetées, ni de filetage.

Le premier sabot de fissuration 18 est fixé sur la chaussette 10. A cet effet, la face inférieure 92 de la plaque inférieure 72 peut être percée d'un ou plusieurs trous filetés et le premier sabot de fissuration 18 peut être percé d'un ou plusieurs orifices traversants 94 correspondants, non représentés, de manière que des vis 96 puissent traverser les orifices traversants 94 et être vissées dans les trous filetés ménagés dans la plaque inférieure 72.

De préférence, des embrèvements sont ménagés dans la plaque inférieure 72 de manière à recevoir les têtes des vis 96, de préférence de manière à ce que les vis 96 ne dépassent pas de la surface inférieure du premier sabot de fissuration 18. De préférence, le nombre d'orifices traversants 94 est supérieur ou égal à 2, par exemple de 2 ou 3.

Le diamètre des orifices traversants 94 peut être supérieur à 8 mm et inférieur à 15 mm, par exemple de 13 mm. Les embrèvements peuvent être définis, par exemple, par un lamage de forme cylindrique, par exemple d'un diamètre de 25 mm. La distance entre les axes de deux orifices traversants 94 adjacents est de préférence supérieure à 20 mm, par exemple de 30 mm.

Le premier sabot de fissuration 18 peut être en acier.

De préférence, sa largeur l₁₈ est sensiblement égale à celle de la chaussette (l₁₀), par exemple supérieure à 30 mm, supérieure à 35 mm, supérieure à 40 mm et/ou inférieure à 60 mm, inférieure à 50 mm, une largeur de 45 mm étant bien adaptée. La longueur L₁₈ du premier sabot de fissuration 18 est de préférence supérieure à 50 mm, supérieure à 60 mm, supérieure à 70 mm et/ou inférieure à 150 mm, inférieure à 120 mm, inférieure à 100 mm, inférieure à 90 mm. Une longueur d'environ 80 mm est préférée.

L'épaisseur du premier sabot de fissuration 18 est de préférence supérieure à 5 mm, supérieure à 10 mm et/ou inférieure à 20 mm, inférieure à 15 mm, une épaisseur d'environ 12 mm étant préférée.

Le premier sabot de fissuration 18 présente de préférence la forme générale d'une plaque de forme sensiblement rectangulaire. Le premier sabot de fissuration 18 présente une face avant 96 formant un angle γ de préférence inférieur à 60°, inférieur à 50° avec le plan du sabot. Une plaquette frontale de protection 98 est fixée sur la face avant 96. De préférence, la plaquette frontale de protection 98 est en carbure de tungstène. De préférence, elle s'étend sur toute la largeur de la face avant 96 et/ou sur toute la longueur de la face avant 96. Son épaisseur est de préférence supérieure à 2 mm, ou supérieure à 3 mm. Ces dimensions peuvent être, par exemple, de 45 × 18 × 4 mm³.

De préférence, le dispositif de fissuration comporte encore un deuxième sabot de fissuration 100. Le deuxième sabot de fissuration 100 présente de préférence une longueur et/ou une épaisseur et/ou une largeur différente(s), de préférence supérieure(s) à celles du premier sabot de fissuration 18. Avantageusement, il est ainsi possible d'adapter précisément la combinaison des sabots de fissuration à la texture du sol à fissurer.

De préférence, la différence d'épaisseur entre le deuxième sabot de fissuration 100 et le premier sabot de fissuration 18 est supérieure à 1mm, supérieure à 2 mm, voire supérieure à 3 mm. De préférence, la différence de largeur est supérieure à 10 mm. De préférence, la différence de longueur est supérieure à 80 mm, supérieure à 90 mm. Dans un mode de réalisation, les dimensions du deuxième sabot de fissuration 100 sont 150 × 60 × 15 mm³

De préférence, le premier sabot de fissuration 18 et le deuxième sabot de fissuration 100 présentent des profils complémentaires de manière à ne pas laisser de cavité entre eux. De préférence, le premier sabot de fissuration 18 pénètre longitudinalement dans un renfoncement 102 du deuxième sabot de fissuration 100. De préférence encore, de chaque côté du renfoncement 102, le deuxième sabot de fissuration 100 présente des faces verticales 104, inclinées par rapport à un plan transversal (perpendiculaire à la direction longitudinale).

Le deuxième sabot de fissuration 100 peut être en un matériau identique au premier sabot de fissuration 18. Il peut être fixé à la plaque inférieure 72 de la chaussette par des moyens identiques ou différents de ceux utilisés pour fixer le premier sabot de fissuration 18. Dans un mode de réalisation, il comporte, comme le premier sabot de fissuration 18, des orifices traversants, par exemple deux orifices traversants, l'entraxe entre deux orifices traversants successifs étant de préférence supérieur à 50 mm, supérieur à 80 mm, voire supérieur à 100 mm.

De préférence, la face inférieure du premier sabot de fissuration 18 et/ou du deuxième sabot de fissuration 100 est couverte, au moins partiellement, de carbure de bore. Les faces latérales du premier sabot de fissuration 18 et/ou du deuxième sabot de fissuration 100 sont de préférence recouvertes, au moins partiellement, de préférence totalement par du carbure de bore, ce qui limite l'usure et facilite la fissuration en largeur.

L'assemblage d'un dispositif de fissuration selon l'invention est particulièrement simple. Il suffit en effet d'introduire le carrelet 12 dans le fourreau 50 jusqu'à mettre en regard les orifices 56, 80 et 86, puis d'introduire la tige 58. De préférence, la tige 58 comporte une tête venant reposer sur la face supérieure de la plaque supérieure 70. De préférence, le seul poids de la tige 58 suffit à bloquer en position le carrelet 12. Si nécessaire, une goupille additionnelle peut également être prévue afin de bloquer mécaniquement la tige 58 en position de verrouillage.

Les sabots de fissuration 18 et 100 sont vissés sur la plaque inférieure 72. Enfin, l'étançon 16 est introduit dans l'espace délimité par les joues 24 et 26 de manière à aligner l'orifice traversant qui y est ménagé avec les orifices 39 de ces joues. La vis 40 est alors introduite de manière à traverser de part en part la chaussette, puis est serrée en position au moyen de l'écrou 41.

En cas de besoin, la tige 58 peut être facilement extraite, la position longitudinale du carrelet 12 être modifiée de manière à aligner un autre orifice 56 avec les orifices 80 et 86, puis la tige 58 peut être replacée en position de verrouillage.

De préférence, le dispositif de fissuration comporte encore des moyens de réglage de l'assiette de la chaussette. En particulier, comme représenté sur la figure 9a en particulier, ces moyens peuvent comporter une vis de réglage vissée dans un alésage de la chaussette et apte à prendre appui sur l'étançon dans la position assemblée, de préférence sur un des chants (faces de l'étançon qui définissent son épaisseur), et en particulier sur le chant arrière de l'étançon, c'est-à-dire opposé au bord d'attaque de la chaussette. La vis de réglage peut être en particulier la vis 55 utilisée pour fixer la fourchette 48 sur la chaussette. L'assiette du dispositif de fissuration, c'est-à-dire son inclinaison par rapport à un plan horizontal, peut être ainsi modifiée par vissage ou dévissage de la vis de réglage.

Le dispositif de réglage de l'assiette peut être également utilisé pour mieux immobiliser le dispositif de fissuration sur l'étançon et/ou pour rendre possible l'utilisation d'étançons présentant différentes largeurs. Comme cela apparaît clairement à présent, l'invention fournit donc un dispositif de fissuration qui ne requiert plus la mise en œuvre d'une pièce 20', et est donc plus léger.

En outre, dans la mesure où le fourreau 50 est défini par la chaussette et/ou le(s) sabot(s) de fissuration est(sont) fixé(s) sur la chaussette, l'étançon n'a plus besoin de comporter des moyens spécifiques pour définir le fourreau ou pour recevoir le(s) sabot(s) de fissuration. Le dispositif de fissuration selon l'invention peut donc être utilisé avec n'importe quel étançon adapté à la forme de la chaussette, ce qui élargit considérablement les possibilités d'utilisation. Par exemple, la chaussette peut comporter plusieurs orifices (notés H et K sur la figure) correspondant à des étançons de type "H" ou de type "K".

Un dispositif de fissuration selon l'invention évite également la remontée des pierres et cailloux à la surface du sol.

Par ailleurs, pour un même étançon, il devient possible de faire varier la distance entre l'extrémité inférieure de l'étançon et l'ensemble constitué par le carrelet 12 et le(s) sabot(s) de fissuration.

Lorsque l'étançon présente la forme d'une virgule, sa partie inférieure est la partie qui s'étend depuis l'extrémité inférieure qui est introduite dans la chaussette jusqu'à la jonction entre les deux branches de la virgule.

De préférence au moins dans la partie qui pénètre entre les joues de la chaussette, de préférence au moins dans la partie inférieure de l'étançon, l'étançon présente une épaisseur constante, de préférence une section transversale constante, au moins jusqu'à la partie terminale éventuellement effilée de l'étançon.

De préférence, la section transversale de l'étançon est sensiblement rectangulaire, la largeur de l'étançon étant de préférence supérieure à 10 mm, de préférence supérieure à 20 mm, et/ou inférieure à 50 mm, de préférence inférieure à 40 mm. La longueur de la section transversale de l'étançon est de préférence supérieure à 30 mm, supérieure à 50 mm, supérieure à 70 mm, et/ou inférieure à 200 mm, inférieure à 150 mm, inférieure à 150 mm, inférieure à 100 mm.

De préférence, l'étançon présente une section transversale de forme rectangulaire sur plus de 50%, de préférence plus de 80%, voire sensiblement 100% de sa longueur. De préférence, l'étançon présente la forme d'un "fer plat", c'est-à-dire dont les deux grandes faces sont sensiblement planes et sensiblement parallèles l'une à l'autre.

De préférence, la partie terminale de l'étançon est effilée et, de préférence, de forme sensiblement complémentaire au logement défini par la chaussette pour la recevoir.

Dans un mode de réalisation avantageux, la partie de l'étançon qui pénètre dans la chaussette, voire la partie inférieure de l'étançon, n'est pourvue que d'un seul orifice traversant, cet orifice traversant l'étançon selon son épaisseur.

De préférence, la partie de l'étançon qui pénètre dans la chaussette est conformée de manière à ce que, dans la position assemblée, elle prenne appui sur la plaque supérieure 70 du fourreau et/ou sur le nez de la chaussette défini par les joues latérales dans la région où elles se rejoignent.

De préférence, dans la position assemblée à l'étançon, l'étançon ne fait pas saillie à l'arrière de la chaussette. De préférence, il ne dépasse de la chaussette que par l'ouverture supérieure de la chaussette, délimitée par les bords supérieurs des joues.

Dans un mode de réalisation, l'étançon est percé selon sa largeur par un alésage, l'alésage débouchant ainsi sur les chants avant et arrière de l'étançon, et le dispositif de fissuration comporte une tige traversant de part en part cet alésage et des moyens fixés sur la tige et permettant de presser l'étançon sur la chaussette. Dans un mode de réalisation, la tige présente une tête prenant appui sur le chant avant de l'étançon et, à l'extrémité opposée, un filetage sur lequel est vissé un écrou, l'écrou venant de préférence presser une plaque 120 sur les joues de la chaussette, comme représenté sur la figure 9a. De préférence, la plaque 120 comporte deux épaulements 120a et 120b prenant appui, respectivement, sur les bords arrière des deux joues de la chaussette. La plaque 120 peut en particulier être un profilé un T, comme représenté sur la figure 9a (sur laquelle la tige et l'écrou n'ont pas été représentés, pour des raisons de clarté). De préférence, la plaque 120 comporte plusieurs trous pouvant être traversés par la tige, de sorte que sa position en hauteur peut être modifiée.

De préférence encore, un semoir 122 (ou « descente de semoir ») est fixé sur la chaussette, ou, de préférence, sur la plaque 120, comme représenté sur la figure 9a. La possibilité de modifier la position en hauteur de la plaque 120 permet avantageusement de modifier la hauteur de l'embouchure inférieure 124 du semoir 122. Comme représenté sur la figure 9b, le semoir peut être également fixé sur une plaque spécifique, de préférence sensiblement parallèle aux joues de la chaussette, cette plaque spécifique étant de préférence percée d'une pluralité de trous de fixation 126. La position en hauteur du semoir 122 peut alors être modifiée indépendamment du trou de la plaque 120 utilisé pour presser l'étançon sur la chaussette. De préférence, les trous de fixation 126 permettent de faire varier la position en hauteur du semoir sur une amplitude supérieure à 100 mm, de préférence sur une amplitude supérieure à 200 mm.

La plaque spécifique peut être la plaque 61. De préférence, les trous de fixation 126 sont les trous 59 ménagés dans la plaque 61 pour fixer les ailes 42.

De préférence encore, le dispositif de fissuration comporte une chaîne 130, par exemple fixée sur la plaque 120, de préférence de manière amovible. La chaîne peut être fixée par tout moyen, par exemple par soudure, mais aussi au moyen d'un crochet ou d'un mousqueton ou d'une manille.

L'extrémité arrière de la chaîne 130 (extrémité libre) comporte de préférence une barre 132 sensiblement transversale améliorant l'efficacité de la chaîne 130 pour déplacer de la terre. De préférence, la barre 132 présente une courbure orientée vers l'arrière, comme représenté sur la figure 8b, afin d'écarter la terre, ou une courbure orientée vers l'avant (vers la chaussette) afin de ramener la terre vers la fissure.

Bien entendu, l'invention n'est pas limitée aux modes de réalisation décrits et représentés, fournis à titre d'exemples illustratifs.

Par exemple, plusieurs semoirs, en particulier deux semoirs, pourraient être fixés la chaussette, comme représenté sur les figures 10b et 10c.

## Revendications

1. Dispositif de fissuration destiné à être fixé sur un étançon (16) d'un déchaumeur ou d'un décompacteur, ledit dispositif comportant
- une chaussette (10), destinée à protéger l'étançon,
- un carrelet (12) comportant une barre (52) logée dans la chaussette et terminée par une tête (54), et
- un sabot de fissuration (18 ; 100),
la chaussette (10) comportant des première (24) et deuxième (26) joues latérales qui s'étendent sensiblement parallèlement l'une à l'autre sur une partie de leur longueur, puis se rejoignent selon un bord d'attaque (28), la forme effilée vers l'avant de la chaussette favorisant la pénétration de la chaussette dans le sol,
le dispositif étant **caractérisé en ce que** le carrelet et/ou le sabot de fissuration (18 ; 100) sont fixés rigidement à la chaussette, la chaussette assurant une fonction de fixation du carrelet et/ou du sabot de fissuration.

2. Dispositif de fissuration selon la revendication précédente, la chaussette définissant un fourreau (50) dans lequel peut être logée la barre du carrelet, le fourreau délimitant un volume présentant de préférence une forme sensiblement complémentaire à la barre du carrelet.

3. Dispositif selon l'une quelconque des revendications précédentes, la chaussette comportant un premier orifice (80) traversant et pouvant être mis en regard d'un orifice (56) du carrelet, le dispositif comportant une tige (58) conformée de manière à pouvoir être introduite dans lesdits orifices pour solidariser le carrelet à la chaussette.

4. Dispositif de fissuration selon la revendication précédente, la chaussette comportant un deuxième orifice (86), traversant ou non, de préférence traversant, lesdits premier et deuxième orifices étant en regard l'un de l'autre et écartés l'un de l'autre pour autoriser l'introduction du carrelet entre eux dans une position permettant à la tige d'être introduite dans le premier orifice (80), l'orifice (56) du carrelet et le deuxième orifice (86).

5. Dispositif selon l'une quelconque des revendications précédentes, les moyens de fixation du carrelet à la chaussette ne comportant pas de vis.

6. Dispositif selon l'une quelconque des revendications précédentes, la chaussette présentant un bord d'attaque (28) définissant avec une normale au plan général du sabot de fissuration, un angle (α) inférieur à 60°.

7. Dispositif selon l'une quelconque des revendications précédentes, dans lequel le sabot de fissuration (18) est fixé sur le carrelet (12), de préférence dans lequel le carrelet (12) et le sabot de fissuration (18) forment un ensemble monobloc.

8. Dispositif selon l'une quelconque des revendications précédentes, au moins deux sabots de fissuration étant fixés sur la chaussette.

9. Dispositif selon la revendication précédente, lesdits deux sabots de fissuration présentant une largeur et/ou une longueur et/ou une épaisseur différente(s).

10. Dispositif selon l'une quelconque des revendications précédentes, la chaussette présentant une forme générale en U, la base du U étant effilée, le dispositif comportant une entretoise, de préférence sous la forme d'une plaque, disposée pour rigidifier la partie effilée de la chaussette et de préférence conformée pour que l'étançon puisse y prendre appui après montage du dispositif de fissuration.

11. Dispositif selon l'une quelconque des revendications précédentes, comportant des ailettes s'étendant sensiblement horizontalement et/ou un semoir et/ou une chaîne disposée de manière à rabattre de la terre dans une fissure créée par ledit dispositif.

12. Dispositif selon l'une quelconque des revendications précédentes, dans lequel le carrelet comporte une tête (54) présentant un bec (65) qui remonte jusqu'à une position en hauteur au-dessus de l'extrémité inférieure (67) du bord d'attaque (28) de la chaussette.

13. Déchaumeur ou décompacteur comportant un étançon pourvu d'un dispositif de fissuration selon l'une quelconque des revendications précédentes.

14. Déchaumeur ou décompacteur selon la revendication précédente, comportant une fourchette (124) comportant un manche (126) fixé sur la chaussette, et une fourche (128) chevauchant l'étançon de manière à limiter les mouvements latéraux de l'étançon.

15. Déchaumeur ou décompacteur selon l'une quelconque des deux revendications immédiatement précédentes, comportant une vis de réglage (120) vissée dans un alésage de la chaussette et en appui sur l'étançon.

16. Déchaumeur ou décompacteur selon l'une quelconque des deux revendications immédiatement précédentes, dans lequel la fixation du manche est assurée au moyen de la vis de réglage (120).

## Patentansprüche

1. Rissbildungsvorrichtung, die dazu bestimmt ist, an einer Zinke (16) einer Egge oder eines Tiefenlockerers befestigt zu werden, wobei die Vorrichtung Folgendes umfasst:
- ein Schutzelement (10), das dazu bestimmt ist, die Zinke zu schützen,
- einen Vierkant (12), der einen Schaft (52) umfasst, der in dem Schutzelement untergebracht ist und mit einem Kopf (54) endet, und
- eine Rissbildungsschar (18; 100),
wobei das Schutzelement (10) eine erste (24) und eine zweite (26) Seitenwange umfasst, die sich über einen Teil ihrer Länge im Wesentlichen parallel zueinander erstrecken und sich dann an einer Vorderkante (28) treffen, wobei die sich nach vorne verjüngende Form des Schutzelements das Eindringen des Schutzelements in den Boden begünstigt,
wobei die Vorrichtung **dadurch gekennzeichnet ist, dass** der Vierkant und/oder die Rissbildungsschar (18; 100) fest an dem Schutzelement befestigt sind, wobei das Schutzelement eine Befestigungsfunktion für den Vierkant und/oder die Rissbildungsschar übernimmt.

2. Rissbildungsvorrichtung nach dem vorhergehenden Anspruch, wobei das Schutzelement eine Scheide (50) definiert, in der der Schaft des Vierkants untergebracht werden kann, wobei die Scheide ein Volumen begrenzt, das vorzugsweise eine zu dem Schaft des Vierkants im Wesentlichen komplementäre Form aufweist.

3. Vorrichtung nach einem beliebigen der vorhergehenden Ansprüche, wobei das Schutzelement eine erste durchgehende Öffnung (80) umfasst, die einer Öffnung (56) des Vierkants gegenübergestellt werden kann, wobei die Vorrichtung eine Stange (58) aufweist, die so ausgebildet ist, dass sie in die Öffnungen eingeführt werden kann, um den Vierkant fest mit dem Schutzelement zu verbinden.

4. Rissbildungsvorrichtung nach dem vorhergehenden Anspruch, wobei das Schutzelement eine zweite durchgehende oder nicht durchgehende Öffnung (86), vorzugsweise eine durchgehende Öffnung, umfasst, wobei die erste und die zweite Öffnung einander gegenüberliegen und voneinander beabstandet sind, um das Einführen des Vierkants zwischen ihnen in eine Position zu gestatten, die es ermöglicht, die Stange in die erste Öffnung (80), die Öffnung (56) des Vierkants und die zweite Öffnung (86) einzuführen.

5. Vorrichtung nach einem beliebigen der vorhergehenden Ansprüche, wobei die Mittel zur Befestigung des Vierkants an dem Schutzelement keine Schraube umfassen.

6. Vorrichtung nach einem beliebigen der vorhergehenden Ansprüche, wobei das Schutzelement eine Vorderkante (28) aufweist, die mit einer Normalen zu der allgemeinen Ebene der Rissbildungsschar einen Winkel (α) kleiner als 60° definiert.

7. Vorrichtung nach einem beliebigen der vorhergehenden Ansprüche, wobei die Rissbildungsschar (18) an dem Vierkant (12) befestigt ist, wobei der Vierkant (12) und die Rissbildungsschar (18) vorzugsweise eine einstückige Anordnung bilden.

8. Vorrichtung nach einem beliebigen der vorhergehenden Ansprüche, wobei mindestens zwei Rissbildungsscharen an dem Schutzelement befestigt sind.

9. Vorrichtung nach dem vorhergehenden Anspruch, wobei die zwei Rissbildungsscharen eine unterschiedliche Breite und/oder Länge und/oder Dicke aufweisen.

10. Vorrichtung nach einem beliebigen der vorhergehenden Ansprüche, wobei das Schutzelement eine allgemeine U-Form aufweist, wobei die Basis des Us sich verjüngt, wobei die Vorrichtung eine Strebe umfasst, vorzugsweise in Form einer Platte, die dazu angeordnet ist, den sich verjüngenden Teil des Schutzelements zu versteifen, und vorzugsweise so ausgebildet ist, dass sich die Zinke nach der Montage der Rissbildungsschar darauf abstützen kann.

11. Vorrichtung nach einem beliebigen der vorhergehenden Ansprüche, die Flügel, die sich im Wesentlichen horizontal erstrecken, und/oder eine Säeinrichtung und/oder eine Kette, die so angeordnet ist, dass sie Erde in einen durch die Vorrichtung erzeugten Riss befördert, umfasst.

12. Vorrichtung nach einem beliebigen der vorhergehenden Ansprüche, wobei der Vierkant einen Kopf (54) mit einem Vorsprung (65) umfasst, welcher höhenmäßig bis zu einer Position oberhalb des unteren Endes (67) der Vorderkante (28) des Schutzelements reicht.

13. Egge oder Tiefenlockerer, die/der eine Zinke umfasst, die über eine Rissbildungsvorrichtung nach einem beliebigen der vorhergehenden Ansprüche verfügt.

14. Egge oder Tiefenlockerer nach dem vorhergehenden Anspruch, die/der eine Gabel (124), die einen an dem Schutzelement befestigten Stiel (126) umfasst, und einen Bügel (128), der die Zinke überspannt, um die seitlichen Bewegungen der Zinke zu begrenzen, umfasst.

15. Egge oder Tiefenlockerer nach einem beliebigen der zwei direkt vorhergehenden Ansprüche, die/der eine Stellschraube (120) umfasst, die in eine Bohrung des Schutzelements eingeschraubt ist und an der Zinke anliegt.

16. Egge oder Tiefenlockerer nach einem beliebigen der zwei direkt vorhergehenden Ansprüche, wobei die Befestigung des Stiels mit Hilfe der Stellschraube (120) gewährleistet wird.

## Claims

1. Ripper device intended to be fastened to a leg (16) of a stubble clearer or of a decompactor, said device having
- a sleeve (10), which is intended to protect the leg,
- a chisel (12) having a bar (52) housed in the sleeve and terminated by a head (54), and
- a ripper shoe (18; 100),
the sleeve (10) having first (24) and second (26) lateral cheeks that extend substantially parallel to one another over a part of their length, then meet at a leading edge (28), the shape that tapers towards the front of the sleeve promoting the penetration of the sleeve into the ground,
the device being **characterized in that** the chisel and/or the ripper shoe (18; 100) are fastened rigidly to the sleeve, the sleeve performing a function of fastening the chisel and/or the ripper shoe.

2. Ripper device according to the preceding claim, the sleeve defining a sheath (50) in which the bar of the chisel can be housed, the sheath delimiting a volume that preferably has a shape that substantially complements the bar of the chisel.

3. Device according to either one of the preceding claims, the sleeve having a first through-orifice (80) that can be placed facing an orifice (56) in the chisel, the device having a shank (58) shaped so as to be able to be introduced into said orifices so as to secure the chisel to the sleeve.

4. Ripper device according to the preceding claim, the sleeve having a second orifice (86), which may or may not be a through-orifice, preferably a through-orifice, said first and second orifices facing one another and being spaced apart from one another so as to allow the chisel to be introduced between them in a position allowing the shank to be introduced into the first orifice (80), the orifice (56) in the chisel and the second orifice (86).

5. Device according to any one of the preceding claims, the means for fastening the chisel to the sleeve not having screws.

6. Device according to any one of the preceding claims, the sleeve having a leading edge (28) that defines, with a normal to the general plane of the ripper shoe, an angle (a) of less than 60°.

7. Device according to any one of the preceding claims, wherein the ripper shoe (18) is fastened to the chisel (12), preferably wherein the chisel (12) and the ripper shoe (18) form a one-piece assembly.

8. Device according to any one of the preceding claims, at least two ripper shoes being fastened to the sleeve.

9. Device according to the preceding claim, said two ripper shoes having different widths and/or lengths and/or thicknesses.

10. Device according to any one of the preceding claims, the sleeve having the overall shape of a U, the base of the U being tapered, the device having a spacer, preferably in the form of a plate, disposed so as to stiffen the tapered part of the sleeve and preferably shaped such that the leg can bear thereon after mounting of the ripper device.

11. Device according to any one of the preceding claims, having wings extending substantially horizontally and/or a seeder and/or a chain disposed so as to shift earth into a crack created by said device.

12. Device according to any one of the preceding claims, wherein the chisel has a head (54) having a snout (65) that rises as far as a heightwise position above the lower end (67) of the leading edge (28) of the sleeve.

13. Stubble clearer or decompactor having a leg provided with a ripper device according to any one of the preceding claims.

14. Stubble clearer or decompactor according to the preceding claim, having a fork (124) having a shaft (126) fastened to the sleeve, and a yoke (128) overlapping the leg so as to limit the lateral movements of the leg.

15. Stubble clearer or decompactor according to either one of the two immediately preceding claims, having an adjustment screw (120) screwed into a bore in the sleeve and bearing on the leg.

16. Stubble clearer or decompactor according to either one of the two immediately preceding claims, wherein the shaft is fastened by means of the adjustment screw (120).
